# EUROPEAN PATENT APPLICATION

(11) **EP 2 737 990 A1**
(43) Date of publication of application: **04.06.2014**
(21) Application number: 13194736.8
(22) Date of filing: 28.11.2013
(51) Int. Cl.: B29C 45/00, B29D 11/00, B60Q 1/00, F21S 8/10, G02B 1/04

(54) **Resin molded product and molding method and molding apparatus thereof**

(30) Priority: 28.11.2012 JP 2012259244
(71) Applicant: KOITO MANUFACTURING CO., LTD., Tokyo (JP)
(72) Inventor: Omote, Masashi, Shizuoka-shi, Shizuoka (JP)
(74) Representative: Intès, Didier Gérard André

(57) **Abstract**

A method for molding a resin molded product, including at least first and second molded portions (11,12,13) having respective distal ends thereof connected to each other by a connecting portion (10), has a pouring step of pouring the resin into base end sides of the first and second molded portions (11,12,13), a stopping step of stopping the resin that has flowed through the first molded portion (11) and the connecting portion (10) and is about to flow in the second molded portion (12,13), and a releasing step of releasing the stoppage of the resin after the second molded portion (12,13) is filled with the resin.

## Description

### BACKGROUND

### TECHNICAL FIELD

The present invention relates to a resin molded product molded by an injection molding method using a mold, and particularly, to a resin molded product including a plurality of linear portions connected to each other at portions thereof, and a molding method and a molding apparatus thereof.

### RELATED ART

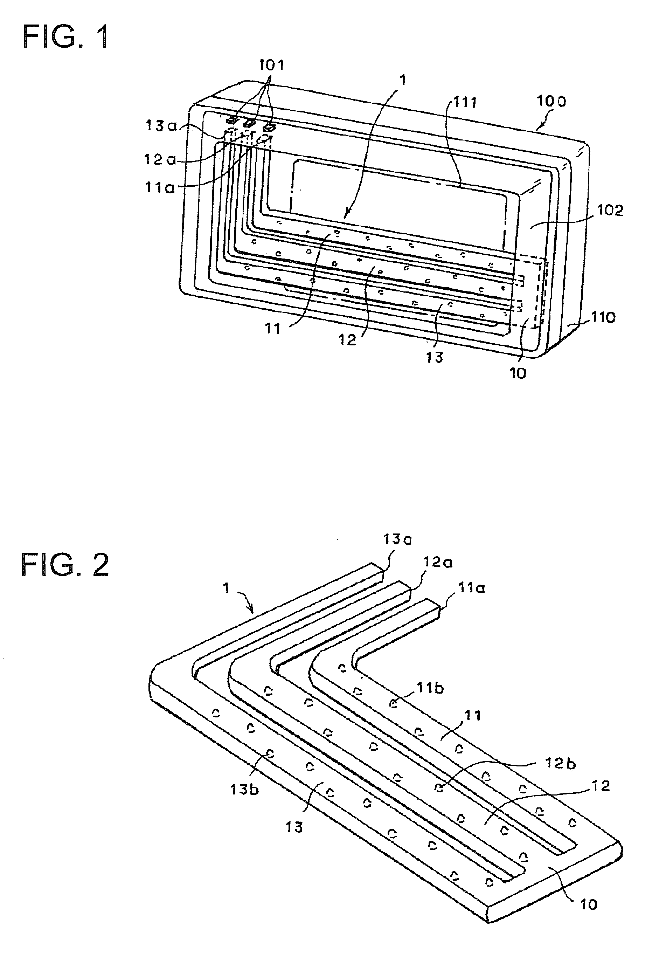

In lamps for a vehicle in recent years, in order to enhance the designing effect in the appearance of the lamps in addition to the indicator function of the related art, a designed light guide is arranged within the lamps. A light guide with a design in which a plurality of linear light guides are connected to each other at end portions thereof is suggested as one of such types of light guides. For example, in a lamp 100 shown in FIG. 1, a grid-like or comb-like light guide 1, in which a plurality of (here, three) generally L-shaped molded portions 11, 12, and 13 are connected to each other at a connecting portion 10, is disposed together with a light source unit 111 within a lamp housing 110, and light sources 101, such as LEDs, are arranged to face base end surfaces of respective base end portions 11a, 12a, and 13a of the molded portions 11, 12, and 13 of the light guide 1. The designing effect of the lamp 100 is enhanced by guiding the light, which is emitted from the light sources 101, from the narrow base end portions 11a, 12a, and 13a of the molded portions 11, 12, and 13 to the inside, and causing the light to be emitted from the surfaces of the molded portions 11, 12, and 13 to bring the light guide 1 into a light-emitting state. In the light guide 1, the molded portions 11, 12, and 13 are configured as design portions observed from the outside, while respective end surface regions of the base end portions 11a, 12a, and 13a, the light sources 101, and the connecting portion 10 are configured as non-design portions that are covered with a pseudo-reflector 102 or the like and not observed from the outside of the lamp 100.

Although the light guide 1 is molded from translucent resin by injection molding using a mold, a weld line may be generated in the molded portions 11, 12, and 13 during molding. That is, as a specific example, when resin is injected from gates provided within a cavity of the mold, the poured resin flows while filling the design portions 21, 22, and 23. At this time, the resin poured into the design portion nearer to the gates flows through the connecting portion and flows through the design portion farther from the gates in an opposite direction, and the resins from both sides merge in a collision state in this molded portion to generate a weld line. Therefore, in the molded portions 11, 12, and 13, the weld line receives the light guided by the light guide and emits light. Thus, the emitted light becomes glare light that interferes with marker lamp light distribution, or degradation of the appearance of the light guide or the lamp occurs.

In order to avoid such a weld line, it is considered to provide the gate independently for each of the plurality of molded portions, and the resin injection amount of each gate is adjusted so that the resins that flow through the molded portions merge at almost the same timing in the connecting portion at respective distal ends of the molded portions. However, in order to perform the adjustment of such resin injection amount, for example, it may be necessary to make the opening sizes of the gates different from each other, and the structure of the mold becomes complicated, resulting in high costs. Additionally, it is difficult to reliably prevent generation of the weld line in the molded portions. On the other hand, Patent Document 1 discloses a countermeasure technique against orientation unevenness that occurs at a flow end in filling the surface of a resin molded product with a coating material after resin molding. In this technique, a convex portion or a movable piece is disposed in a portion of a cavity of a mold, the flow of resin within the cavity is delayed by the convex portion or the movable piece, and the position of a coating material flow end is set to a portion that does not affect the appearance. Accordingly, it is possible to apply this technique to avoid the weld line in the design portions in resin molding of the light guide.
[Patent Document 1] Japanese Patent Application Laid-Open (Kokai) No. JP-A-2004-136536

### SUMMARY

When the convex portion is disposed in a portion of the cavity in order to apply the technique of Patent Document 1 to the resin molding of the light guide, the flow of resin is always delayed in the convex portion and disturbance occurs in the flow of the resin. Therefore, deterioration of the resin filling property, such as generation of voids (bubbles) in the portion, occurs, may result in decrease of molding quality. Such a decrease in molding quality may not occur when the movable piece is disposed at a portion of the cavity as described in Patent Document 1. However, a mechanism for moving the movable piece is required, and the structure of a molding apparatus becomes complicated, resulting in high costs of the mold. Also, it is difficult to take the timing at which the movable piece is moved, so molding work becomes complicated.

One or more embodiments of the present invention provides a resin molded product for which deterioration of the appearance quality due to a weld line is prevented without causing such degradation of the molding quality or such complication of the molding structure, and a molding method and a molding apparatus thereof.

A resin molded product according to one or more embodiments of the present invention is a resin molded product, in which a plurality of molded portions having their respective distal ends connected to each other by a connecting portion are integrally formed by resin molding, the molded portions are configured as design portions, and the connecting portion is configured as a non-design portion. The resin molded product is characterized in that a weld line is not present in the molded portions, but the weld line is present in the connecting portion. For example, according to one or more embodiments of the present invention, the resin molded product may be configured as a light guide that is formed of translucent resin and that guides light therein.

A molding method according to one or more embodiments of the present invention is a method for molding a resin molded product, including at least first and second molded portions having their respective distal ends connected to each other by a connecting portion. The method is characterized by comprising: a step of pouring the resin into base end sides of the first and second molded portions; a step of stopping the resin that has flowed through the first molded portion and the connecting portion and is about to flow in the second molded portion; and a step of releasing the stoppage of the resin after the second molded portion is filled with the resin. Particularly, the molding method may be characterized in that the step of releasing the stoppage of the resin is performed with a pressure of the resin filling the second molded portion.

A molding apparatus according to one or more embodiments of the present invention is characterized by comprising: a cavity that is configured to include at least first and second molded portions having their respective distal ends connected to each other by a connecting portion; a gate that allows resin to be poured into the cavity from base end sides of the first and second molded portions; and a resin stopper portion that is disposed at a connecting point between the connecting portion and the second molded portion having a longer length from the gate, out of the first and second molded portions, and which stops the resin flowing through the connecting portion. In the apparatus, the resin stopper portion is configured to release the stoppage of the resin using the resin that flows through the second molded portion. According to one or more embodiments of the present invention, the resin stopper portion may include a slider capable of blocking a resin flow channel of the connecting portion, and biasing means for holding the slider at a position to block the resin flow channel, and the biasing means may be set to have such a biasing force that the slider is able to be moved from the position to block the resin flow channel to a position to open the resin flow channel with a pressure of the resin that fills the second molded portion.

Since the weld line of the resin is not present in the molded portion serving as a design portion, glare light is not generated and thus, the resin molded product according to one or more embodiments of the present invention has a good appearance. Particularly, when the resin molded product is configured as the light guide, the light that is guided through the design portion is prevented from becoming an edge light due to the weld line, so the resin molded product can be configured as a light-emitting portion with uniform brightness.

According to the method and apparatus for molding a resin molded product according to one or more embodiments of the present invention, a flow of the resin is stopped at the connecting portion serving as the non-design portion by the resin stopper portion. Thus, it is possible to manufacture the resin molded product that can prevent collision and merge of resin in the molded portion serving as the design portion and does not generate the weld line of the resin in the design portion. Additionally, since the resin stopper portion automatically opens and closes the connecting portion with the resin pressure, the configuration of the resin stopper portion or the mold can be simplified. Thus, the resin molded product can be manufactured at low costs. Also, degradation of the filling property of the resin during resin molding can be prevented, so improvements in the molding quality can be expected.

### BRIEF DESCRIPTION OF THE DRAWINGS

FIG. 1 is an external view of an example of a lamp in which a light guide according to one or more embodiments of the present invention is provided.
FIG. 2 is an external view of the light guide according to one or more embodiments of the present invention.
FIGS. 3(a)-(b) show a vertical sectional view and a horizontal sectional view of a mold for molding the light guide according to one or more embodiments of the present invention along line a-a and line b-b, respectively.
FIGS. 4(a)-(b) show enlarged perspective views for explaining a configuration and operation of a resin stopper portion.
FIGS. 5(a)-(b) show schematic horizontal sectional views of the mold for explaining a resin molding operation (process 1).
FIGS. 6(a)-(b) show schematic horizontal sectional views of the mold for explaining the resin molding operation (process 2).
FIGS. 7(a)-(b) show schematic horizontal sectional views of the mold for explaining the resin molding operation (process 3).

### DETAILED DESCRIPTION

Embodiments of the present invention will be described with reference to the drawings. In embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

In this embodiment, an example will be described, in which a resin molded product according to one or more embodiments of the present invention is configured as a curved comb-like light guide 1 in which respective distal end portions of a plurality of molded portions are connected to each other by a connecting portion as shown in FIG. 1. That is, the light guide 1, as shown in FIG. 2, has three generally L-shaped molded portions 11, 12, and 13 that are each formed such that a base end-side region is narrow and a distal end-side region is broad, and the molded portions are connected to each other at their respective distal end portions by a connecting portion 10. When the light guide 1 is disposed in a lamp 100 as shown in FIG. 1, the light emitted from light sources 101 that are arranged to face the base end portions are guided into the molded portions 11, 12, and 13 and the connecting portion 10. Then, some of the light is emitted to the outside from the molded portions 11, 12, and 13 and the connecting portion 10 so that the light guide 1 is brought into a light-emitting state. The molded portions 11, 12, and 13 are configured as design portions that can be observed from the outside of the lamp 100. The connecting portion is configured as a non-design portion that is covered with a pseudo-reflector (extension) 102 disposed in the lamp 100 so as not to be observed from the outside. Accordingly, the molded portions will be described below as the design portions and the non-design portion. In addition, light distribution means 11b, 12b, and 13b that are irregularities or steps and refract or diffuse outgoing light to obtain required light distribution, are formed on the surfaces of the design portions 11, 12, and 13; however, the detailed description thereof will be omitted here.

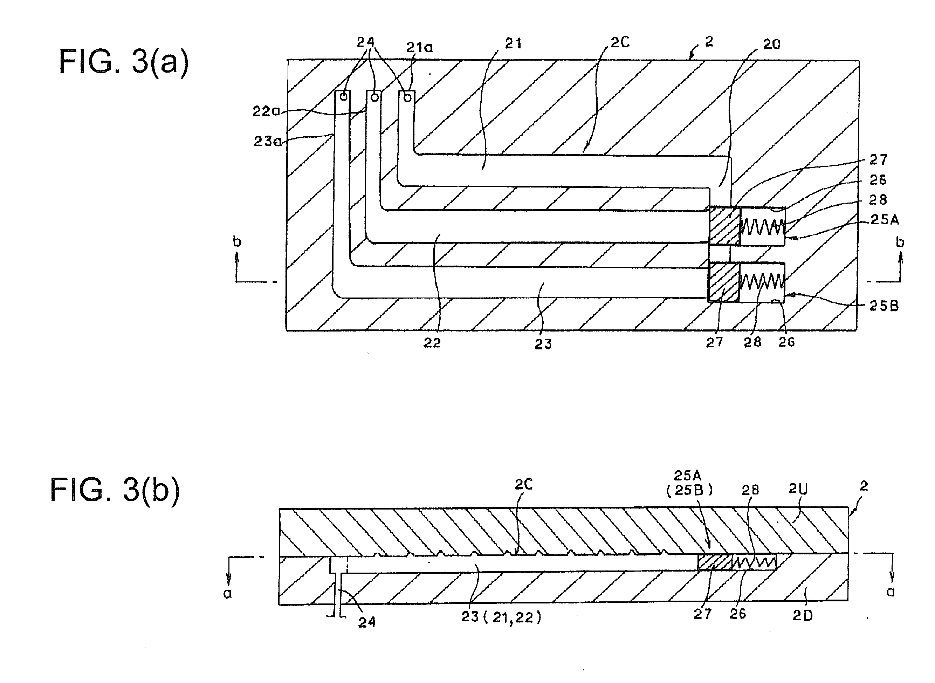

FIGS. 3(a) and 3(b) are a vertical sectional view and a horizontal sectional view of a mold for resin-molding the light guide 1, and are sectional views of the mold along line a-a and line b-b of the drawing, respectively. The mold 2 has a lower stationary mold 2D and an upper movable mold 2U. A cavity 2C with a shape corresponding to the light guide 1 is formed between the stationary mold 2D and the movable mold 2U. That is, the cavity 2C is a cavity including: three generally L-shaped design portions 21, 22, and 23 that are each formed such that a base end-side region is narrow and a distal end-side region is broad; and a non-design portion 20 that connects distal end portions of the design portions 21, 22, and 23 to each other. In the stationary mold 2D, three gates 24 in total are open at positions corresponding to respective base end portions 21a, 22a, and 23a of the three design portions 21, 22, and 23 of the cavity 2C. Translucent resin for molding the light guide 1 is injected into the cavity 2C from the gates 24. Here, for the length of design portions 21, 22, and 23, is set longer in order from the design portion 21 to the design portion 23. In other words, the cavity volume is set larger in the order of the design portions 21, 22, and 23.

Resin stopper portions 25A and 25B are disposed between the stationary mold 2D and the movable mold 2U so as to face a connecting point between the design portion 22 and the non-design portion 20 and a connecting point between the design portion 23 and the non-design portion 20, respectively. That is, the resin stopper portions 25A and 25B are disposed at points where the two design portions 22 and 23, other than the design portion 21 that is shortest length among the three design portions 21, 22, and 23, and the non-design portion 20 are connected.

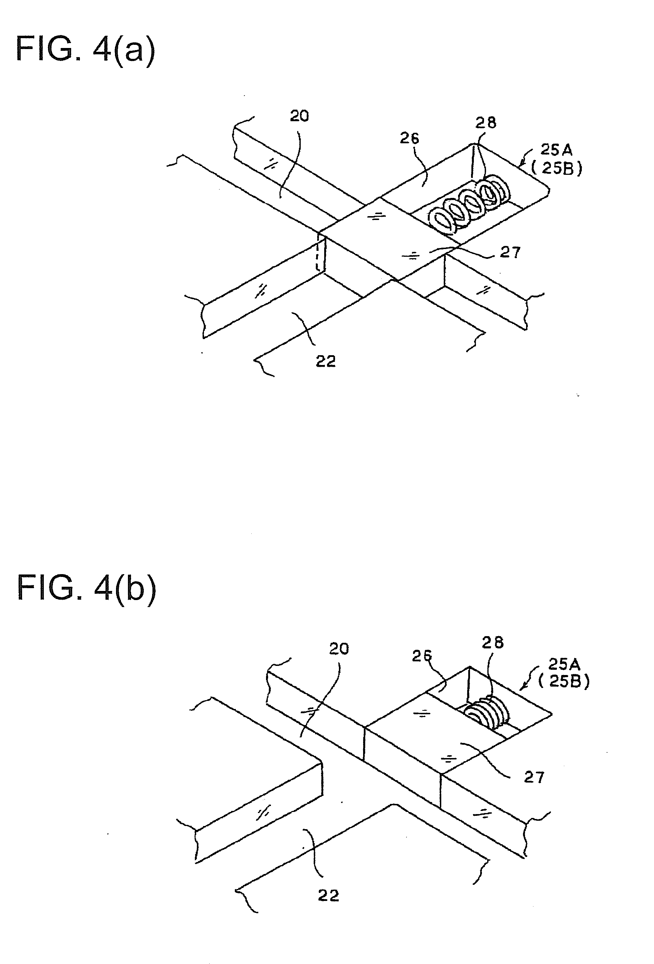

The two resin stopper portions 25A and 25B each have a recessed groove portion 26. The groove portion 26 is formed by extending a portion of the non-design portion 20 with a required width dimension and a required length dimension toward the side opposite from the design portion 22, at the point where the design portion 22 and the non-design portion 20 that is on the distal end side of the design portion 22 are connected to each other, as shown in a schematic perspective view of one resin stopper portion 25A of FIG. 4. A slider 27 is provided in the groove portion 26 so as to be slidable in the longitudinal direction of the groove portion 26. The slider 27 is made of a material that is the same as or similar to a material of which the mold is made, so the shape of the slider is not changed even by heating during resin molding. Additionally, a compression coil spring 28 set to have a predetermined spring force is elastically mounted between a back surface of the slider 27 and an internal bottom surface of the groove portion 26. The slider 27 is provided with movement inclination in a front-surface direction, which is caused by the spring force of the compression coil spring 28. The width dimension of the groove portion 26 is set slightly larger than the width dimension of the design portion 22, and the width dimension of the slider 27 is set equal to the width dimension of the groove portion 26. Therefore, when the slider 27 is moved by the compression coil spring 28 in the front-surface direction within the groove portion 26, a front surface of the slider 27 is held abutting against a distal end area of the design portion 22. Since the length dimension of the slider 27 is set larger than the width dimension of the non-design portion 20, the non-design portion 20 is blocked by the slider 27 while the front surface of the slider 27 abuts against the distal end area. The resin stopper portion 25B also has the same configuration when the design portion 22 is substituted with the design portion 23. Note that the width dimension of the slider 27 may not be necessarily larger than the width dimension of the design portion 22, provided that at least a portion of the front surface of the slider 27 abuts against the distal end area of the design portion 22 and the non-design portion 20 is held in a blocked state.

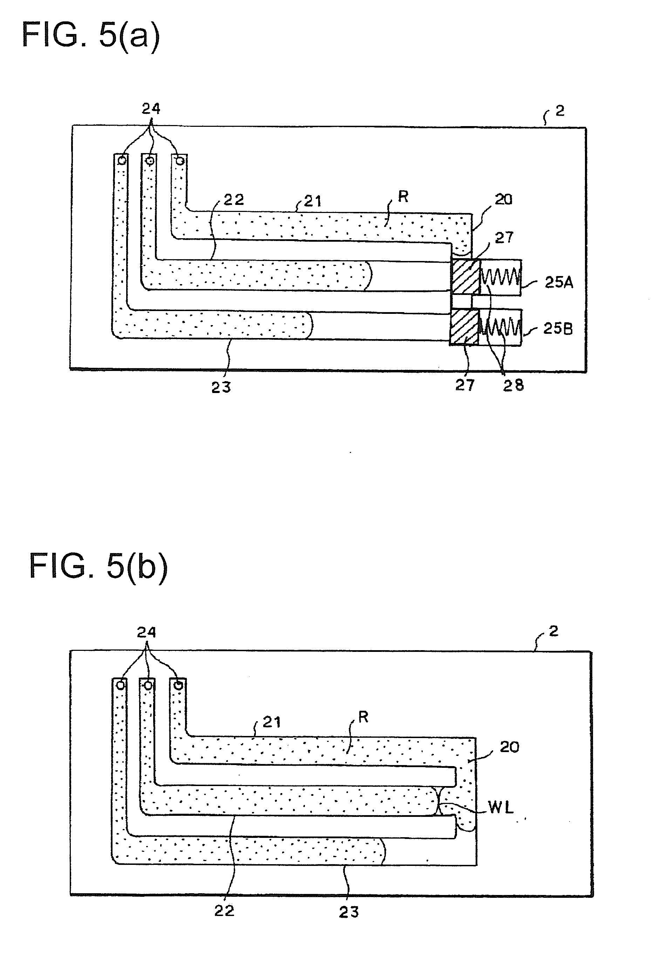

The light guide 1 may be manufactured using the mold 2 in exactly the same way as the light guides up to now. That is, the light guide 1 may be manufactured simply by bringing the movable mold 2U into close contact with the stationary mold 2D, injecting translucent resin into the cavity 2C from the gates 24, filling the cavity with the resin, cooling and curing the resin, then releasing the movable mold 2U, and taking out a molded product from the cavity 2C. FIG. 5(a) is a view showing the flow state of the resin within the cavity during the molding described above. When resin R is poured into the cavity 2C from the gates 24 as shown in FIG. 5(a), the resin R flows toward the three design portions 21, 22, and 23. Although the lengths of the design portions 21, 22, and 23 are different from one another, the resin R flows through the design portions 21, 22, and 23 at the same flow rate. Thus, even if the design portion 21 having a shorter length from the gates 24 (a first molded portion according to one or more embodiments of the present invention; the same applies below) is filled with the resin, the design portion 22 having a longer length (a second molded portion according to one or more embodiments of the present invention; the same applies below) and the design portion 23 having an even longer length are not yet completely filled with the resin R. Therefore, when an attempt is made to completely fill the design portion 22 having a longer length with the resin R, the resin R in the design portion 21 having a shorter length flows up to the non-design portion 20 on the distal end side beyond the design portion 21.

At this time, supposing the resin stopper portions 25A and 25B are not present in the mold 2, the resin that has flowed from the design portion 21 having a shorter length into the non-design portion 20 flows in an opposite direction toward the adjacent design portion 22 having a longer length from the distal end side thereof, as shown in FIG. 5(b). Accordingly, the resin R that has flowed from the gate 24 and the resin R that has flowed in the opposite direction from the non-design portion 20 to the design portion 22 collide and merge in the design portion 22 having a longer length, and a weld line WL is generated in the design portion 22 due to the merge of the resin R. The weld line WL causes generation of glare light and deterioration of the appearance of the design portion 22 when the design portion 22 is brought into a light-emitting state as described above.

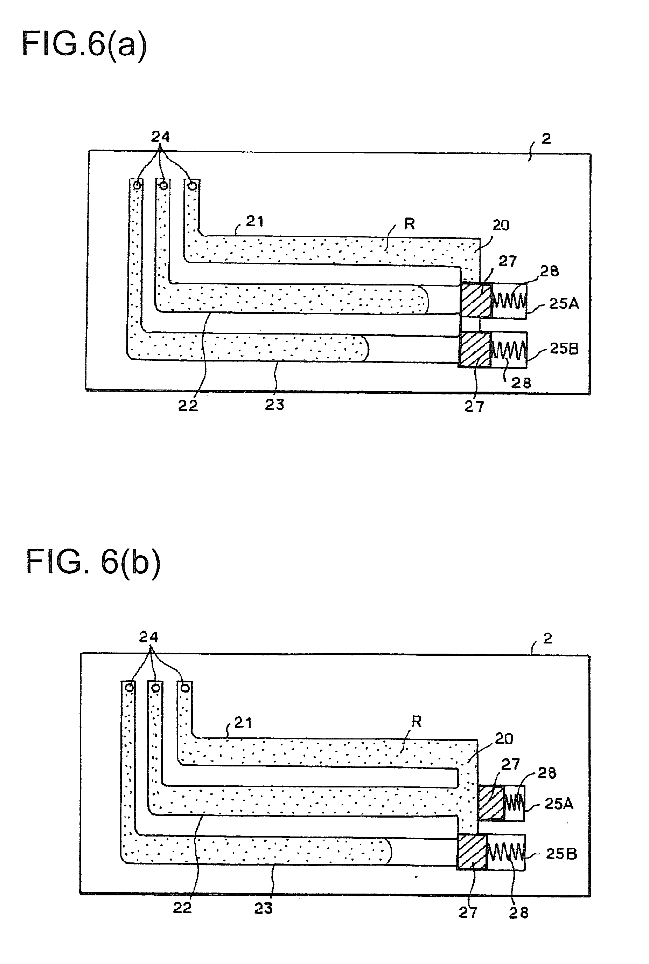

However, in one or more embodiments, the resin stopper portion 25A is provided in the non-design portion 20 at a connecting point with the design portion 22 having a longer length, and at the connecting point, the non-design portion 20 is blocked by the slider 27 of the resin stopper portion 25A, as shown in FIG. 6(a). Thus, the flow of the resin R that has flowed from the design portion 21 into the non-design portion 20 is stopped by the resin stopper portion 25A. Accordingly, the resin R that has flowed through the non-design portion 20 does not flow in the opposite direction from the distal end side of the design portion 22 until the design portion 22 having a longer length is filled with the resin R, and generation of the weld line WL caused by the collision of the resin R in the design portion 22 as described above can be prevented.

As shown FIG. 6(b), when the design portion 22 having a longer length is filled with the resin R, the flow pressure of the resin R, that is, the injection pressure of the resin R is applied to the front surface of the slider 27, so that the slider 27 is pushed into the groove portion 26 against the spring force of the compression coil spring 28. Therefore, the blocked state of the non-design portion 20 caused by the slider 27 is released, and consequently, the resin R in the non-design portion 20 that has been stopped and the resin R that has flowed through the design portion 22 having a longer length merge and flow through the non-design portion 20 toward the design portion 23 having a length even longer than that of the design portion 22.

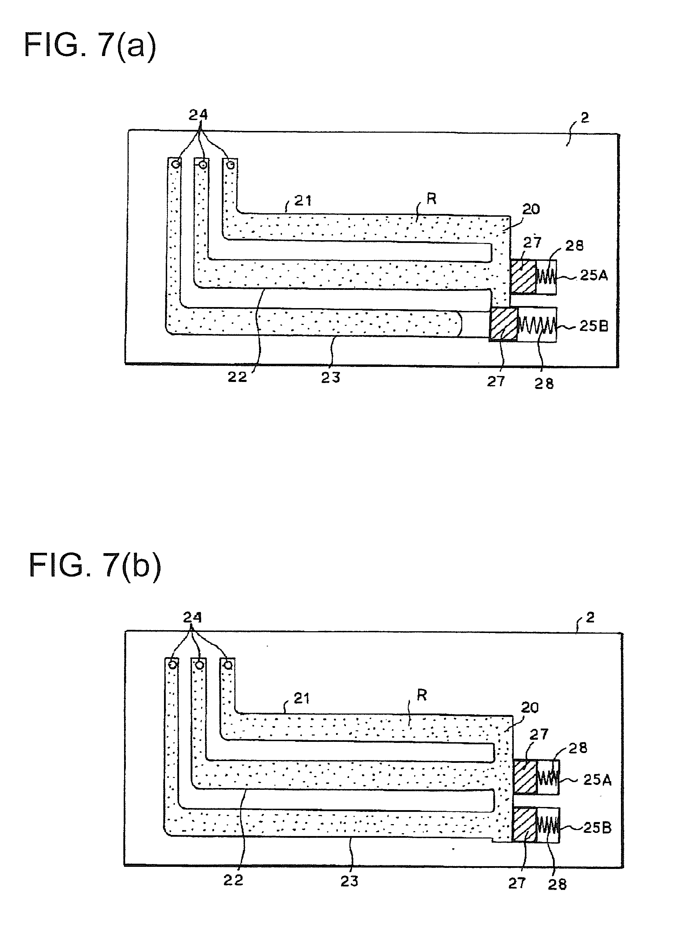

During this time, the resin R flows from the gate 24 through the design portion 23 having an even longer length, as shown in FIG. 7(a). At this time, however, the resin R has not completely filled the design portion 23 yet. Accordingly, although the resin R that has flowed through the non-design portion 20 attempts to flow in the opposite direction into the design portion 23 having an even longer length, the flow is stopped by the resin stopper portion 25B disposed at the connecting point between the design portion 23 and the on-design portion 20. That is, in this situation, the design portion 23 having an even longer length serves as the second molded portion in one or more embodiments of the present invention, and the design portion 22 adjacent to the design portion 23 serves as the first molded portion in one or more embodiments of the present invention. This stoppage continues until the design portion 23 having an even longer length is filled with the resin R. As shown in FIG. 7(b), when the design portion 23 is filled with the resin R, the slider 27 of the resin stopper portion 25B is pushed into the groove portion 26 against the spring force of the compression coil spring 28, which is generated by the resin pressure in the design portion 23, and the blocked state of the non-design portion 20 caused by the slider 27 is released. This causes the resin R stopped in the non-design portion 20 and the resin R that has flowed through the design portion 23 to merge, and consequently, the cavity 2C is filled with the resin R. Accordingly, since the merge caused by the collision of the resin R in the design portion 23 is prevented, generation of the weld line WL in the design portion 23 can be prevented.

Thus, by providing the resin stopper portions 25A and 25B in the mold 2, the resin R that has flowed through the design portion 21 or 22 serving as the first molded portion having a shorter length can be prevented from flowing through the non-design portion 20 that serves as a connecting portion and flowing, in the opposite direction, into the design portion 22 or 23 that serves as the second molded portion having a longer length, and generation of the weld line WL in the design portions 22 and 23 having a longer length can be prevented. The resin stopper portions 25A and 25B each include the slider 27 biased by the compression coil spring 28 and are moved by the pouring pressure of the resin R, which has flowed up to the resin stopper portions 25A and 25B, to open the non-design portion 20. Thus, a smooth flow of the resin R is secured when the non-design portion 20 is open, so that the filling property of the resin R for the cavity 2C is enhanced and generation of voids or the like can be prevented, thereby enhancing resin molding quality. This eliminates the need for a configuration for actively opening and closing the slider 27 and a configuration such as a sensor or the like for detecting the operation timing of the slider 27. Therefore, the configuration of the resin stopper portions 25A and 25B can be simplified, and the mold 2 can be formed at low costs.

Here, the resin stopper portions are not limited to the configuration above. One or more embodiments of the present invention adopts a configuration that the slider is usually held at such a position that the connecting portion is blocked and the slider is moved with the pressure of the resin. Thus, a spring member having other configuration may be used, in place of the compression coil spring, for elastically holding the slider. Alternatively, the resin stopper portions may be configured using an elastic material, such as rubber, air pressure, or the like. Additionally, the resin stopper portions may have a configuration in which a hinge body that is operated to rotate is elastically supported by a torsion spring member, and the connecting portion is opened and closed by operating to rotate the hinge body with the pressure of the resin.

Although the example of the light guide including the three design portions has been described above, the number or shape of the design portions may be selected as appropriate. The design portions, that is, the molded portions according to one or more embodiments of the present invention may be at least two, and may be four or more. In this case, the resin stoppers may be provided at the points where the molded portions having longer length from the gates and the connecting portion are connected to each other. Therefore, the resin stoppers may be disposed in a number corresponding to the number of the molded portions having longer distances. Above, an independent gate is provided for each of the three design portions. However, a configuration may be adopted in which the design portions are connected to each other at their respective base end portions by a connecting portion and a common gate is provided for the connecting portion. This can reduce the number of the gates, thereby achieving further simplification and cost reduction of the mold.

The resin molded product is not limited to the light guide described above. One or more embodiments of present invention can be applied to a resin molded product having such a shape that the resin injected into the cavity flows through a plurality of flow channels in the cavity during resin molding. Particularly, as for the first molded portion and the second molded portion according to one or more embodiments of the present invention, a molded portion having a shorter length from the gate serves as the first molded portion and a molded portion having a longer length serves as the second molded portion in one or more embodiments of the present invention. One or more embodiments of the present invention adopts a configuration in which, on the basis of the comparison on cavity volume between the molded portions, a molded portion having a smaller cavity volume serves as the first molded portion and a molded portion having a larger cavity volume serves as the second molded portion. In the mold having such a configuration as well, generation of the weld line of the resin in the second molded portion can be prevented. While above, one or more embodiments of the present invention is applied to a lamp for a vehicle, it is also possible to apply one or more embodiments of the present invention to a rear combination lamp or a headlamp of an automobile.

One or more embodiments of the present invention can be adopted for a resin molded product that is required to prevent quality degradation due to a weld line, and a molding method and a molding apparatus thereof.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

Description of the Reference Numerals
- 1: LIGHT GUIDE
- 10: CONNECTING PORTION (NON-DESIGN PORTION)
- 11, 12, 13: MOLDED PORTION (DESIGN PORTION)
- 2: MOLD
- 2C: CAVITY
- 20: CONNECTING PORTION (NON-DESIGN PORTION)
- 21, 22, 23: MOLDED PORTION (DESIGN PORTION)
- 24: GATE
- 25A, 25B: RESIN STOPPER PORTION
- 26: GROOVE PORTION
- 27: SLIDER
- 28: COMPRESSION COIL SPRING
- 100: LAMP
- 101: LIGHT SOURCE (LED)
- 102: PSEUDO-REFLECTOR
- 110: LAMP HOUSING
- 111: LIGHT SOURCE UNIT

## Claims

1. A resin molded product comprising:
a plurality of molded portions (11,12,13) integrally formed by resin molding;
a connecting portion (10) that connects distal ends of the molded portions (11,12,13),
wherein the molded portions (11,12,13) are configured as design portions,
wherein the connecting portion (10) is configured as a non-design portion, and
wherein no weld line is present in the molded portions (11,12,13), and a weld line is present in the connecting portion (10).

2. The resin molded product according to claim 1,
wherein the resin molded product is a light guide (1) that is formed of translucent resin and that guides light therein.

3. A method for molding a resin molded product, said resin molded product including at least first and second molded portions (11,12,13) having respective distal ends thereof connected to each other by a connecting portion (10), said method comprising:
a pouring step of pouring the resin into base end sides of the first and second molded portions (11,12,13);
a stopping step of stopping the resin that has flowed through the first molded portion (11) and the connecting portion (10) and is about to flow in the second molded portion (12,13); and
a releasing step of releasing the stoppage of the resin after the second molded portion (12,13) is filled with the resin.

4. The method for molding a resin molded product according to claim 3,
wherein the releasing step is performed with a pressure of the resin filling the second molded portion (12,13).

5. An apparatus (2) for molding a resin molded product, comprising:
a cavity (2C) configured to include at least first and second molded portions (21,22,23) having respective distal ends thereof connected to each other by a connecting portion (20);
a gate (24) that allows resin to be poured into the cavity (2C) from base end sides of the first and second molded portions (21,22,23); and
a resin stopper portion (25A,25B) disposed at a connecting point between the connecting portion (20) and the second molded portion (22,23) having a longer length from the gate (24), out of the first and second molded portions (21,22,23), and which stops the resin flowing through the connecting portion (20),
wherein the resin stopper portion (25A,25B) is configured to release the stoppage of the resin using the resin that flows through the second molded portion (22,23).

6. The apparatus (2) for molding a resin molded product according to claim 5,
wherein the resin stopper portion (25A,25B) comprises:
a slider (27) capable of blocking a resin flow channel of the connecting portion (20), and
a biasing means (28) for holding the slider (27) at a position to block the resin flow channel, and
wherein the biasing means (28) is set to have a biasing force that allows the slider (27) to be moved from the position to block the resin flow channel to a position to open the resin flow channel with a pressure of the resin that fills the second molded portion (22,23).
